# EUROPEAN PATENT SPECIFICATION

(11) **EP 2 311 922 B1**
(45) Date of publication and mention of the grant of the patent: **04.09.2019**
(21) Application number: 09794528.1
(22) Date of filing: 10.07.2009
(51) Int. Cl.: C09K 3/10, D01F 9/127, D06M 11/34, F16J 15/10

(54) **SEALING MEMBER FOR PIPING MATERIAL HAVING EXCELLENT CHLORINE RESISTANCE, METHOD FOR PRODUCING SEALING MEMBER FOR PIPING MATERIAL HAVING EXCELLENT CHLORINE RESISTANCE, SEALING MEMBER FOR PIPING MATERIAL HAVING EXCELLENT OIL RESISTANCE, AND PIPING MATERIAL**
ABDICHTUNGSELEMENT FÜR EIN RÖHRENMATERIAL MIT HERVORRAGENDER CHLORBESTÄNDIGKEIT, VERFAHREN ZUR HERSTELLUNG DES ABDICHTUNGSELEMENTS FÜR EIN RÖHRENMATERIAL MIT HERVORRAGENDER CHLORBESTÄNDIGKEIT, ABDICHTUNGSELEMENT FÜR EIN RÖHRENMATERIAL MIT HERVORRAGENDER ÖLBESTÄNDIGKEIT UND RÖHRENMATERIAL
ORGANE D'ÉTANCHÉITÉ POUR MATÉRIAU DE CANALISATION AYANT UNE EXCELLENTE RÉSISTANCE AU CHLORE, PROCÉDÉ DE PRODUCTION D'UN ORGANE D'ÉTANCHÉITÉ POUR MATÉRIAU DE CANALISATION AYANT UNE EXCELLENTE RÉSISTANCE AU CHLORE, ORGANE D'ÉTANCHÉITÉ POUR MATÉRIAU DE CANALISATION AYANT UNE EXCELLENTE RÉSISTANCE À L'HUILE, ET CANALISATION

(30) Priority: 11.07.2008 JP 2008181871; 11.07.2008 JP 2008181872
(43) Date of publication of application: 20.04.2011
(73) Proprietor: Nissin Kogyo Co., Ltd., Tomi-city Nagano 389-0514 (JP); KITZ CORPORATION, Chiba-shi, Chiba 261-8577 (JP)
(72) Inventor: NOGUCHI, Toru, Tomi-city Nagano, 389-0514 (JP); UEKI, Hiroyuki, Tomi-city Nagano, 389-0514 (JP); ASANO, Yuichi, Chiba-shi Chiba 261-8577 (JP)
(74) Representative: Haseltine Lake Kempner LLP
(86) International application number: PCT/JP2009/062619
(87) International publication number: WO 2010/005084

(56) References cited:
- JP-A- 63 280 788
- JP-A- 2004 059 409
- JP-A- 2004 210 821
- JP-A- 2006 189 092
- JP-A- 2007 062 570
- JP-A- 2007 064 377
- JP-A- 2008 024 800
- Stephan Haiber ET AL: "Analysis of functional groups on the surface of plasma-treated carbon nanofibers", Analytical and Bioanalytical Chemistry, 1 April 2003 (2003-04-01), pages 875-883, XP055226595, Berlin/Heidelberg DOI: 10.1007/s00216-003-1792-6 Retrieved from the Internet: URL:http://link.springer.com/content/pdf/1 0.1007/s00216-003-1792-6.pdf [retrieved on 2015-11-06]
- KHALID LAFDI ET AL: "Effect of Carbon Nanofiber-Matrix Adhesion on Polymeric Nanocomposite Properties-Part II", JOURNAL OF NANOMATERIALS, vol. 38, no. 3, 1 January 2008 (2008-01-01), pages 59-8, XP055226591, US ISSN: 1687-4110, DOI: 10.1016/S0008-6223(99)00047-0

## Description

### TECHNICAL FIELD

The present invention relates to a piping component seal member having excellent chlorine resistance, and a method of producing a piping component seal member having excellent chlorine resistance.

### BACKGROUND ART

A piping component such as a valve that is disposed in a fluid (e.g., water, oil, or gas) pipe, and is used to open and close the fluid passage is normally provided with a seal member formed of an elastic material (e.g., rubber). Such a seal member is required to have hardness, tensile strength, elongation, tear strength, compressive elasticity, abrasion resistance, oil resistance, chemical resistance, heat resistance, gas barrier capability, and the like (see Japanese Patent No. 2932420, for example). Therefore, a piping component seal member produced by mixing carbon black with an ethylene-propylene rubber (EPDM) that exhibits excellent mechanical strength, and vulcanizing and molding the mixture, has been used.

For example, chlorine (free residual chlorine) used for sterilization, cleaning, and decolorization remains in tap water, public baths, pools, food production facilities, and the like. A related-art piping component seal member has excellent mechanical strength. However, the surface of the rubber of the seal member may be oxidized or chlorinated due to free residual chlorine, so that a crosslinked layer or a fragile layer may be formed. Such a crosslinked layer or a fragile layer may crack due to vibrations caused by a water stream or the like, so that a black component and the like are removed and remain in the piping system. Therefore, an improvement in chlorine resistance has been desired for such a piping component seal member. In order to deal with such a demand, a butterfly valve rubber sheet (hereinafter referred to as "seal member") that does not include carbon black as a reinforcing agent has been proposed (see Japanese Patent No. 2872830, for example). However, such a butterfly valve seal member has a large fluid contact area as compared with a stationary seal member. Since a fluid comes in contact with the seal member at a certain speed, the effect of a lubricant quickly decreases. Moreover, since the disk is strongly pressed against the seal member during the sliding operation, a black component may be removed due to deterioration in the seal member caused by chlorine.

An ethylene-propylene rubber swells due to nonpolar oil (e.g., mineral oil or gasoline) (i.e., has poor oil resistance). Therefore, a seal member formed of a nitrile rubber (NBR) has been used for a piping component for which oil resistance is required. Accordingly, an improvement in oil resistance has been desired for a piping component seal member produced using an ethylene-propylene rubber.

A composite material produced by uniformly dispersing carbon fibers and carbon black in an elastomer has also been proposed (see JP-A-2007-39649, for example).

JP-A-2007-062570 describes a hydraulic pressure master cylinder having a sealing member formed by dispersing carbon nanofibers and carbon black in a non-crosslinked rubber, in which the carbon nanofibers may be surface treated by ion-injection, sputter etching or plasma treatment before the mixing step.

### SUMMARY OF INVENTION

### TECHNICAL PROBLEM

An object of the invention is to provide a piping component seal member having excellent chlorine resistance, and a method of producing a piping component seal member having excellent chlorine resistance.

### SOLUTION TO PROBLEM

The present invention is defined in and by the appended claims.

A piping component seal member having excellent chlorine resistance according to the invention includes an ethylene-propylene rubber, surface-oxidized carbon nanofibers, and carbon black having an average particle diameter of 50 nm to 10 micrometers.

Since the surface-oxidized carbon nanofibers and the carbon black having an average particle diameter of 50 nm to 10 micrometers are relatively stable upon contact with chlorine, chlorine ions, hypochlorous acid, and hypochlorite ions contained in an aqueous solution, the ethylene-propylene rubber deteriorates to only a small extent at the interface with these reinforcing agents, so that the piping component seal member according to the invention exhibits excellent chlorine resistance. Since the piping component seal member having excellent chlorine resistance according to the invention is reinforced by the carbon nanofibers and the carbon black, the piping component seal member exhibits excellent mechanical strength.

In the above piping component seal member having excellent chlorine resistance, the carbon nanofibers have a surface oxygen concentration measured by X-ray photoelectron spectroscopy (XPS) of 2.6 to 4.6 atm%.

In the above piping component seal member having excellent chlorine resistance, the carbon nanofibers have an average diameter of 20 to 230 nm.

The above piping component seal member having excellent chlorine resistance may include 5 to 50 parts by mass of the carbon nanofibers and 10 to 120 parts by mass of the carbon black based on 100 parts by mass of the ethylene-propylene rubber.

A method of producing a piping component seal member having excellent chlorine resistance according to the invention includes a first step that includes oxidizing first carbon nanofibers produced by a vapor growth method to obtain surface-oxidized second carbon nanofibers, and a second step that includes mixing carbon black having an average particle diameter of 50 nm to 10 micrometers and the second carbon nanofibers into an ethylene-propylene rubber, and dispersing the carbon black and the second carbon nanofibers in the ethylene-propylene rubber by applying a shear force.

Since the surface-oxidized carbon nanofibers and the carbon black having an average particle diameter of 50 nm to 10 micrometers are relatively stable upon contact with chlorine, chlorine ions, hypochlorous acid, and hypochlorite ions contained in an aqueous solution, the ethylene-propylene rubber deteriorates to only a small extent at the interface with these reinforcing agents. Therefore, a piping component seal member having excellent chlorine resistance can be produced by the above method. Moreover, since the piping component seal member is reinforced by the carbon nanofibers and the carbon black, the piping component seal member exhibits excellent mechanical strength.

In the above method of producing a piping component seal member having excellent chlorine resistance, the carbon nanofibers have a surface oxygen concentration measured by X-ray photoelectron spectroscopy (XPS) of 2.6 to 4.6 atm%.

In the above method of producing a piping component seal member having excellent chlorine resistance, the first step may be performed so that the surface oxygen concentration of the second carbon nanofibers measured by X-ray photoelectron spectroscopy (XPS) is higher than that of the first carbon nanofibers by 0.5 to 2.6 atm%.

In the above method of producing a piping component seal member having excellent chlorine resistance, the first step may be performed so that the surface oxygen concentration of the second carbon nanofibers measured by X-ray photoelectron spectroscopy (XPS) is higher than that of the first carbon nanofibers by 20 to 120%.

In the above method of producing a piping component seal member having excellent chlorine resistance, the first step may include heating the first carbon nanofibers at 600 to 800°C in an oxygen-containing atmosphere.

In the above method of producing a piping component seal member having excellent chlorine resistance, the first step may include reducing the mass of the first carbon nanofibers by 2 to 20% to obtain the second carbon nanofibers.

In the above method of producing a piping component seal member having excellent chlorine resistance, the first carbon nanofibers may have an average diameter of 4 to 250 nm.

In the above method of producing a piping component seal member having excellent chlorine resistance, the second step may include mixing 5 to 50 parts by mass of the second carbon nanofibers and 10 to 120 parts by mass of the carbon black with 100 parts by mass of the ethylene-propylene rubber.

A piping component according to the invention includes the above seal member having excellent chlorine resistance.

A piping component according to the invention includes a seal member having excellent chlorine resistance, the seal member including an ethylene-propylene rubber, surface-oxidized carbon nanofibers, and carbon black having an average particle diameter of 50 nm to 10 micrometers.

Since the surface-oxidized carbon nanofibers and the carbon black having an average particle diameter of 50 nm to 10 micrometers are relatively stable upon contact with chlorine, chlorine ions, hypochlorous acid, and hypochlorite ions contained in an aqueous solution, the ethylene-propylene rubber deteriorates to only a small extent at the interface with these reinforcing agents. Therefore, the piping component according to the invention exhibits excellent chlorine resistance. Moreover, since the seal member is reinforced by the carbon nanofibers and the carbon black, the piping component according to the invention exhibits excellent mechanical strength.

In the above piping component, the carbon nanofibers have a surface oxygen concentration measured by X-ray photoelectron spectroscopy (XPS) of 2.6 to 4.6 atm%.

In the above piping component, the carbon nanofibers have an average diameter of 20 to 230 nm.

In the above piping component, the seal member may include 5 to 50 parts by mass of the carbon nanofibers and 10 to 120 parts by mass of the carbon black based on 100 parts by mass of the ethylene-propylene rubber.

A piping component seal member having excellent oil resistance according to the present disclosure includes an ethylene-propylene rubber, 5 to 70 parts by mass of carbon nanofibers based on 100 parts by mass of the ethylene-propylene rubber, and 0 to 120 parts by mass of carbon black based on 100 parts by mass of the ethylene-propylene rubber, the total amount of the carbon nanofibers and the carbon black being 50 to 190 parts by mass based on 100 parts by mass of the ethylene-propylene rubber.

According to the above piping component seal member having excellent oil resistance, swelling of the ethylene-propylene rubber can be physically suppressed by the carbon nanofibers dispersed in the ethylene-propylene rubber.

In the above piping component seal member having excellent oil resistance, the carbon nanofibers may have an average diameter of 4 to 230 nm, and the carbon black may have an average particle diameter of 10 nm to 10 micrometers.

In the above piping component seal member having excellent oil resistance, the amount of the carbon nanofibers may be 15 to 65 parts by mass based on 100 parts by mass of the ethylene-propylene rubber.

A piping component according to the present disclosure includes the above seal member having excellent oil resistance.

A piping component according to the present disclosure includes a seal member having excellent oil resistance, the seal member including an ethylene-propylene rubber, 5 to 70 parts by mass of carbon nanofibers based on 100 parts by mass of the ethylene-propylene rubber, and 0 to 120 parts by mass of carbon black based on 100 parts by mass of the ethylene-propylene rubber, and the total amount of the carbon nanofibers and the carbon black being 50 to 190 parts by mass based on 100 parts by mass of the ethylene-propylene rubber.

According to the above piping component, since swelling of the seal member can be physically suppressed by the carbon nanofibers dispersed in the ethylene-propylene rubber, the piping component can be used for applications that require oil resistance.

In the above piping component, the carbon nanofibers may have an average diameter of 4 to 230 nm, and the carbon black may have an average particle diameter of 10 nm to 10 micrometers.

In the above piping component, the amount of the carbon nanofibers may be 15 to 65 parts by mass based on 100 parts by mass of the ethylene-propylene rubber.

### BRIEF DESCRIPTION OF DRAWINGS

FIG. 1 is a diagram schematically illustrating a mixing step using an internal mixer.
FIG. 2 is a diagram schematically illustrating a third mixing step (tight milling) of a rubber composition using an open-roll machine.
FIG. 3 is a vertical cross-sectional view illustrating a schematic configuration of a butterfly valve that is one embodiment of a piping component.
FIG. 4 is a cross-sectional view taken along a line X-X' in FIG. 3 and illustrating the opening/closing operation of the butterfly valve that is one embodiment of a piping component.
FIG. 5 is a schematic enlarged view illustrating part of the cross section of a piping component seal member.
FIG. 6 is a schematic enlarged view illustrating part of the cross section of a related-art piping component seal member.
FIG. 7 is a graph illustrating a change in mass of second carbon nanofibers with respect to temperature measured by thermogravimetry (TG).
FIG. 8 illustrates photographs of a sodium hypochlorite aqueous solution after samples of the examples and the comparative examples have been immersed for 1004 hours.
FIG. 9 is a schematic diagram illustrating a friction tester.

### DESCRIPTION OF EMBODIMENTS

Embodiments of the invention are described in detail below.

A piping component seal member having excellent chlorine resistance according to one embodiment of the invention, a method of producing a piping component seal member having excellent chlorine resistance according to one embodiment of the invention, and a piping component according to one embodiment of the invention are described below.

A piping component seal member having excellent chlorine resistance according to one embodiment of the invention includes an ethylene-propylene rubber, surface-oxidized carbon nanofibers, and carbon black having an average particle diameter of 50 nm to 10 micrometers, wherein the carbon nanofibers have a surface oxygen concentration measured by X-ray photoelectron spectroscopy (XPS) of 2.6 to 4.6 atm%; wherein the carbon nanofibers have an average diameter of 20 nm to 230 nm.

A method of producing a piping component seal member having excellent chlorine resistance according to one embodiment of the invention includes a first step that includes oxidizing first carbon nanofibers produced by a vapor growth method to obtain surface-oxidized second carbon nanofibers, and a second step that includes mixing carbon black having an average particle diameter of 50 nm to 10 micrometers and the second carbon nanofibers into an ethylene-propylene rubber, and dispersing the carbon black and the second carbon nanofibers in the ethylene-propylene rubber by applying a shear force, wherein the carbon nanofibers have a surface oxygen concentration measured by X-ray photoelectron spectroscopy (XPS) of 2.6 to 4.6 atm%; wherein the second carbon nanofibers have an average diameter of 20 nm to 230 nm.

A piping component according to one embodiment of the invention includes a seal member having excellent chlorine resistance that includes an ethylene-propylene rubber, surface-oxidized carbon nanofibers, and carbon black having an average particle diameter of 50 nm to 10 micrometers, wherein the carbon nanofibers have a surface oxygen concentration measured by X-ray photoelectron spectroscopy (XPS) of 2.6 to 4.6 atm%; wherein the carbon nanofibers have an average diameter of 20 nm to 230 nm.

### (I) Surface-oxidized carbon nanofibers

### First carbon nanofibers

The first carbon nanofibers used in the first step of the method of producing a piping component seal member, and the second carbon nanofibers obtained by the first step are described below.

The first carbon nanofibers are produced by a vapor growth method, for example. The vapor growth method includes pyrolyzing gas (e.g., hydrocarbon gas) in the presence of a metal catalyst to produce the first carbon nanofibers. As the vapor growth method, a method that introduces an organic compound (e.g., benzene or toluene) (i.e., raw material) and an organotransition metal compound (e.g., ferrocene or nickelocene) (i.e., metal catalyst) into a reaction furnace set at a high temperature (e.g., 400 to 1000°C) together with a carrier gas to produce the first carbon nanofibers on a substrate, a method that produces the first carbon nanofibers in a floating state, a method that causes the first carbon nanofibers to be grown on the wall of the reaction furnace, or the like may be used. Alternatively, metal-containing particles supported on a fire-resistant support (e.g., alumina or carbon) may be caused to come in contact with a carbon-containing compound at a high temperature to obtain the first carbon nanofibers having a diameter of 70 nm or less. The first carbon nanofibers produced by the vapor growth method preferably have an average diameter of 4 to 250 nm. The first carbon nanofibers may be referred to as untreated carbon nanofibers since the surface thereof is not oxidized. It is preferable to improve the dispersibility of the first carbon nanofibers by oxidizing the surface of the first carbon nanofibers.

The first carbon nanofibers produced by the vapor growth method may be heated at 2000 to 3200°C in an inert gas atmosphere before oxidizing the first carbon nanofibers. The heating temperature is more preferably 2500 to 3200°C, and particularly preferably 2800 to 3200°C. If the heating temperature is 2000°C or more, impurities such as amorphous products deposited on the surface of the first carbon nanofibers during vapor growth and the residual metal catalyst can be removed. If the heating temperature is 2500°C or more, the skeleton of the first carbon nanofibers is graphitized (crystallized), so that the number of defects of the first carbon nanofibers decreases. As a result, the first carbon nanofibers exhibit improved strength. If the heating temperature is 3200°C or less, breakage of the graphite skeleton due to graphite sublimation rarely occurs. The first carbon nanofibers thus graphitized exhibit excellent strength, thermal conductivity, electrical conductivity, and the like as a result of graphitization.

Examples of the first carbon nanofibers include a carbon nanotube and the like. The carbon nanotube has a structure in which a graphite hexagonal carbon layer is rolled in one or more layers. A carbon material having a partial carbon nanotube structure may also be used. The carbon nanotube may also be referred to as a graphite fibril nanotube or a vapor-grown carbon fiber.

### Second carbon nanofibers

The second carbon nanofibers are obtained by oxidizing (surface-oxidizing) the first carbon nanofibers produced by the vapor growth method. The oxidization treatment is described later in connection with the method of producing a piping component seal member. The surface oxygen concentration of the second carbon nanofibers determined by X-ray photoelectron spectroscopy (XPS) is 2.6 to 4.6 atm%, preferably 3.0 to 4.0 atm%, and more preferably 3.1 to 3.7 atm%. Specifically, since the second carbon nanofibers have a moderately oxidized surface, the surface reactivity of the second carbon nanofibers with the ethylene-propylene rubber is improved, so that the dispersibility of the second carbon nanofibers in the ethylene-propylene rubber can be improved. The second carbon nanofibers may have a mass lower than that of the first carbon nanofibers by 2 to 20%. The second carbon nanofibers preferably have a ratio (D/G) of a peak intensity D at around 1300 cm⁻¹ to a peak intensity G at around 1600 cm⁻¹ measured by Raman scattering spectroscopy of 0.12 to 0.22. The second carbon nanofibers preferably have a specific surface area by nitrogen adsorption of 34 to 58 m²/g. The second carbon nanofibers have an average diameter of 20 to 230 nm, particularly preferably 60 to 150 nm. If the diameter of the second carbon nanofibers is 4 nm or more, the second carbon nanofibers exhibit improved dispersibility in the matrix material. If the diameter of the second carbon nanofibers is 230 nm or less, the flatness of the surface of the matrix material is rarely impaired. If the average diameter of the second carbon nanofibers is 60 nm or more, excellent dispersibility and surface flatness can be achieved. If the average diameter of the second carbon nanofibers is 150 nm or less, the number of carbon nanofibers increases by adding only a small amount of carbon nanofibers, so that the performance of the resulting piping component seal member can be improved. This makes it possible to use only a small amount of expensive first carbon nanofibers to obtain the second carbon nanofibers. The second carbon nanofibers preferably have an aspect ratio of 50 to 200.

Since the surface of the second carbon nanofibers has been moderately oxidized, the second carbon nanofibers exhibit improved surface reactivity with another material (e.g., a matrix material of a composite material), so that the carbon nanofibers exhibit improved wettability with the matrix material. The rigidity and the flexibility of the composite material can be improved by utilizing the carbon nanofibers that exhibit improved wettability. In particular, wettability of the second carbon nanofibers with the matrix material can be improved by moderately oxidizing the surface of the graphitized first carbon nanofibers with relatively low reactivity, so that dispersibility can be improved. Therefore, equivalent properties can be obtained by adding a small amount of second carbon nanofibers. Since the surface of carbon black having a relatively small diameter is activated by chlorine, chlorine ions, hypochlorous acid, and hypochlorite ions contained in an aqueous solution, an ethylene-propylene rubber that comes in contact with the surface of the carbon black deteriorates due to oxidation. On the other hand, the surface-oxidized second carbon nanofibers have a number of sites where the carbon atoms present on the surface thereof are substituted with an oxygen atom, and the oxygen atoms present on the surface thereof bond to the molecule of the ethylene-propylene rubber (i.e., are in a relatively stable state). It is conjectured that the surface of the second carbon nanofibers is rarely activated by chlorine, chlorine ions, hypochlorous acid, and hypochlorite ions for the above reasons. Therefore, an ethylene-propylene rubber that includes the second carbon nanofibers exhibits excellent chlorine resistance as compared with an ethylene-propylene rubber that includes carbon black having a small diameter.

The amount of the second carbon nanofibers mixed into the ethylene-propylene rubber may be appropriately adjusted depending on the degree of reinforcement required for the application of the piping component seal member, and the amount of carbon black mixed into the ethylene-propylene rubber. For example, the second carbon nanofibers may be used in an amount of 5 to 50 parts by mass based on 100 parts by mass of the ethylene-propylene rubber. If the amount of the second carbon nanofibers is 5 parts by mass or more, the ethylene-propylene rubber can be reinforced by increasing the amount of carbon black. If the amount of the second carbon nanofibers is 50 parts by mass or less, relatively excellent processability can be obtained.

### (II) Carbon black

As the carbon black having an average particle diameter of 50 nm to 10 micrometers, carbon black of various grades produced using various raw materials may be used either individually or in combination. The primary particles of the carbon black have an average particle diameter of 50 nm to 10 micrometers, and preferably 50 to 150 nm. An ethylene-propylene rubber that includes carbon black having such a relatively large particle size exhibits excellent chlorine resistance. Moreover, since the ethylene-propylene rubber system can be roughly divided, the amount of the ethylene-propylene rubber and the amount of the second carbon nanofibers can be reduced (i.e., it is economical). The surface of carbon black having a small diameter that has been used for a piping component seal member is easily activated by chlorine, chlorine ions, hypochlorous acid, and hypochlorite ions contained in an aqueous solution. When mixing carbon black having a small diameter into an ethylene-propylene rubber, an oxidation reaction occurs at the interface between the carbon black and the ethylene-propylene rubber, so that the ethylene-propylene rubber deteriorates. Therefore, if the average particle diameter of the carbon black is less than 50 nm, chlorine resistance may deteriorate although an excellent reinforcement effect is obtained. If the average particle diameter of the carbon black is more than 10 micrometers, a reinforcement effect may deteriorate. Therefore, it is preferable to use carbon black having an average particle diameter of 10 micrometers or less from the economical viewpoint. For example, SRF carbon black, MT carbon black, FT carbon black, Austin black, GPF carbon black, and the like may be used.

The amount of the carbon black mixed into the ethylene-propylene rubber may be appropriately adjusted depending on the degree of reinforcement required for the application of the piping component seal member, and the amount of the second carbon nanofibers mixed into the ethylene-propylene rubber. For example, the carbon black may be used in an amount of 10 to 120 parts by mass based on 100 parts by mass of the ethylene-propylene rubber. If the amount of the carbon black is 10 parts by mass or more, the ethylene-propylene rubber can be reinforced, and the amounts of the ethylene-propylene rubber and the second carbon nanofibers can be reduced. If the amount of the carbon black is 120 parts by mass or less, processing and mass production can be implemented.

### (III) Ethylene-propylene rubber

It is preferable to use an ethylene-propylene-diene copolymer (EPDM) as the ethylene-propylene rubber. In order to obtain heat resistance, cold resistance, and a seal capability required for the piping component seal member, the ethylene-propylene rubber preferably includes a third component such as ethylidenenorbornene, and is preferably an EPDM having an ethylene content of 45 to 80%. The weight average molecular weight of the ethylene-propylene rubber is preferably 50,000 or more, more preferably 70,000 or more, and particularly preferably about 100,000 to about 500,000. If the molecular weight of the ethylene-propylene rubber is within the above range, the ethylene-propylene rubber molecules are entangled and linked, so that the ethylene-propylene rubber easily enters the space between the aggregated carbon nanofibers. Therefore, an effect of separating the carbon nanofibers is improved. If the molecular weight of the ethylene-propylene rubber is less than 5000, the ethylene-propylene rubber molecules may not be sufficiently entangled, so that an effect of dispersing the carbon nanofibers may be small even if a shear force is applied in a step described later. If the molecular weight of the ethylene-propylene rubber is more than 5,000,000, the ethylene-propylene rubber may be too hard, so that the processability of the ethylene-propylene rubber may deteriorate.

### (IV) Method of producing piping component seal member

The method of producing a piping component seal member includes the first step and the second step.

### First step

The first step of the method of producing a piping component seal member is described below. The first step includes oxidizing first carbon nanofibers produced by a vapor growth method to obtain surface-oxidized second carbon nanofibers. The first carbon nanofibers may have been graphitized as described above. The surface oxygen concentration of the second carbon nanofibers obtained by the first step, determined by X-ray photoelectron spectroscopy (XPS), is 2.6 to 4.6 atm%, preferably 3.0 to 4.0 atm%, and more preferably 3.1 to 3.7 atm%. The second carbon nanofibers are preferably oxidized so that the surface oxygen concentration of the second carbon nanofibers is higher than that of the first carbon nanofibers by 0.2 atm% or more. The first step may be performed so that the surface oxygen concentration of the second carbon nanofibers measured by X-ray photoelectron spectroscopy (XPS) is higher than that of the first carbon nanofibers by 0.5 to 2.6 atm%. The surface oxygen concentration of the second carbon nanofibers measured by X-ray photoelectron spectroscopy (XPS) is preferably higher than that of the first carbon nanofibers by 0.9 to 1.9 atm%, and more preferably 1.0 to 1.6 atm%. The first step may be performed so that the surface oxygen concentration of the second carbon nanofibers measured by X-ray photoelectron spectroscopy (XPS) is higher than that of the first carbon nanofibers by 20 to 120%. The surface oxygen concentration of the second carbon nanofibers measured by X-ray photoelectron spectroscopy (XPS) is preferably higher than that of the first carbon nanofibers by 43 to 90%, and more preferably 48 to 76%. Specifically, since the surface of the second carbon nanofibers have been moderately oxidized, the surface reactivity of the second carbon nanofibers with the ethylene-propylene rubber is improved, so that the dispersibility of the carbon nanofibers in the ethylene-propylene rubber can be improved. The first step may include heating the first carbon nanofibers at 600 to 800°C in an oxygen-containing atmosphere. For example, the first carbon nanofibers are placed in a furnace containing air, and heated at a predetermined temperature within the range of 600 to 800°C to obtain second carbon nanofibers having a surface that has been oxidized at a desired oxygen concentration. The heat treatment time of the first step (i.e., the period of time in which the first carbon nanofibers are held in the furnace at a predetermined temperature) may be 10 to 180 minutes, for example. The oxygen-containing atmosphere may be an ambient atmosphere, an oxygen atmosphere, or an atmosphere for which the oxygen concentration is appropriately adjusted. It suffices that the atmosphere have an oxygen concentration sufficient for the surface of the second carbon nanofibers to be oxidized to the desired oxygen concentration by the first step. The heating temperature may be appropriately set within the range of 600 to 800°C so that the desired oxidation treatment is achieved. The first carbon nanofibers may be normally burnt at about 800°C, and damaged to a large extent. Therefore, it is desirable to carefully set the heating temperature and the heating time through repeated experiments. Note that the heating temperature and the heating time may be appropriately adjusted depending on the oxygen concentration of the furnace used for the first step, the internal volume of the furnace, the amount of first carbon nanofibers subjected to the oxidation treatment, and the like. The second carbon nanofibers obtained by the first step preferably have a mass lower than that of the first carbon nanofibers by 2 to 20%, for example. If the reduction in mass is within the above range, the second carbon nanofibers have been moderately oxidized. If the second carbon nanofibers have a mass lower than that of the first carbon nanofibers by less than 2%, the surface oxygen concentration of the second carbon nanofibers is so low that an improvement in wettability may not be obtained. When the mass of the second carbon nanofibers has been reduced as compared with the first carbon nanofibers by more than 20%, the second carbon nanofibers exhibit almost the same wettability as that of the second carbon nanofibers that have been reduced in mass by 20% or less (i.e., the carbon nanofibers are unnecessarily lost). Moreover, it may be uneconomical with respect to the energy consumption of the heat treatment. Specifically, when the surface of the first carbon nanofibers is oxidized, carbon that forms the surface of the first carbon nanofibers is vaporized as carbon dioxide. It is considered that the fiber length of the carbon nanofibers is reduced to only a small extent when the second carbon nanofibers are not reduced in mass as compared with the first carbon nanofibers by more than 20%. The surface oxygen concentration of the second carbon nanofibers may be analyzed by X-ray photoelectron spectroscopy (XPS). The oxygen concentration is preferably analyzed by XPS after subjecting the second carbon nanofibers to an argon gas etching treatment for 0.5 to 1.0 minutes so that impurities adhering to the surface of the second carbon nanofibers are removed (i.e., the surface of the second carbon nanofibers is exposed), for example. The argon gas concentration employed in the argon gas etching treatment is preferably 5×10⁻² to 20×10⁻² Pa, and the argon gas pressure (gage pressure) is preferably 0.4 to 0.5 MPa. The surface oxygen concentration is preferably analyzed by XPS after bonding a carbon tape (i.e., conductive adhesive) to a metal stage of an XPS apparatus, sprinkling the second carbon nanofibers over the carbon tape so that the second carbon nanofibers adhere to the carbon tape, and removing the second carbon nanofibers that do not adhere to the carbon tape, for example. Specifically, the surface oxygen concentration of the second carbon nanofibers is preferably analyzed by XPS while allowing the second carbon nanofibers to be in a powdery state without pressing the second carbon nanofibers on the carbon tape to have a block-like form.

The second carbon nanofibers obtained by the first step preferably have a ratio (D/G) of a peak intensity D at around 1300 cm⁻¹ to a peak intensity G at around 1600 cm⁻¹ measured by Raman scattering spectroscopy of 0.12 to 0.22. The second carbon nanofibers have a Raman peak ratio (D/G) larger than that of the first carbon nanofibers due to an increase in the number of crystal defects of the surface of the second carbon nanofibers. The second carbon nanofibers are preferably oxidized so that the second carbon nanofibers have a Raman peak ratio (D/G) larger than that of the first carbon nanofibers by 0.02 or more. The second carbon nanofibers preferably have a specific surface area by nitrogen adsorption of 34 to 58 m²/g. The specific surface area by nitrogen adsorption of the second carbon nanofibers is larger than that of the first carbon nanofibers due to surface roughness. The second carbon nanofibers are preferably oxidized so that the second carbon nanofibers have a specific surface area by nitrogen adsorption larger than that of the first carbon nanofibers by 9 m²/g or more. The average diameter of the first carbon nanofibers used in the first step is preferably 4 to 250 nm. The average diameter of the second carbon nanofibers obtained by the first step may be 4 to 230 nm. The second carbon nanofibers having the above properties exhibit improved surface reactivity and wettability with the ethylene-propylene rubber.

The amount of the second carbon nanofibers mixed into the ethylene-propylene rubber may be adjusted depending on the application. Since the wettability of the second carbon nanofibers with the ethylene-propylene rubber has been improved, the amount of the second carbon nanofibers can be reduced when producing a piping component seal member having a given rigidity (i.e., it is economical), for example.

### Second step

The second step of the method of producing a piping component seal member includes mixing carbon black having an average particle diameter of 50 nm to 10 micrometers and the second carbon nanofibers obtained by the first step into an ethylene-propylene rubber, and dispersing the carbon black and the second carbon nanofibers in the ethylene-propylene rubber by applying a shear force.

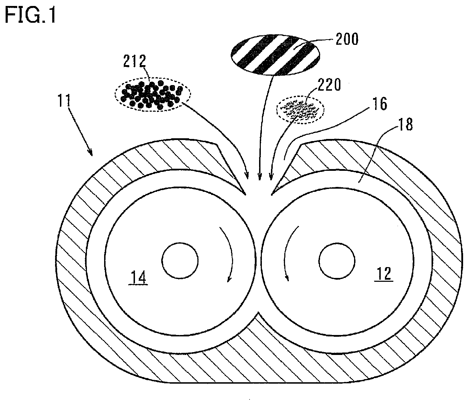

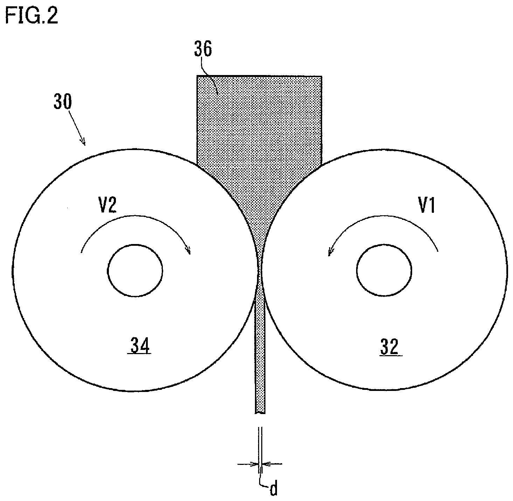

In the second step, the ethylene-propylene rubber and the second carbon nanofibers may be supplied to a mixer such as open rolls, a single-screw or twin-screw extruder, a Banbury mixer, or a kneader, and mixed. The filler (e.g., carbon black) other than the second carbon nanofibers is preferably supplied to the mixer before supplying the second carbon nanofibers. The step of mixing the ethylene-propylene rubber, the carbon black, and the second carbon nanofibers may include a first mixing step of mixing the ethylene-propylene rubber, the carbon black, and the second carbon nanofibers at a first temperature, a second mixing step of mixing the mixture obtained by the first mixing step at a second temperature, and a third mixing step of tight-milling the mixture obtained by the second mixing step. An example in which an internal mixing method is used in the first mixing step and the second mixing step, and an open-roll method is used in the third mixing step, is described in detail below with reference to FIGS. 1 and 2.

FIG. 1 is a diagram schematically illustrating a mixing step using an internal mixer 11 including two rotors. FIG. 2 is a diagram schematically illustrating the third mixing step (tight milling) of the piping component seal member using an open-roll machine.

In FIG. 1, the internal mixer 11 includes a first rotor 12 and a second rotor 14.

### Mixing step

An ethylene-propylene rubber 200 is supplied through a material supply port 16 of the internal mixer 11, and the first rotor 12 and the second rotor 14 are rotated. After the addition of predetermined amounts of carbon black 212 and second carbon nanofibers 220 to a chamber 18, the ethylene-propylene rubber 200, the carbon black 212, and the second carbon nanofibers 220 are mixed by rotating the first rotor 12 and the second rotor 14.

### First mixing step

In the first mixing step, the mixture obtained by the mixing step is further mixed by applying a high shear force to the mixture by rotating the first rotor 12 and the second rotor 14 at a predetermined velocity ratio. In the first mixing step, the ethylene-propylene rubber and the second carbon nanofibers are mixed at the first temperature that is lower than the temperature of the second mixing step by 50 to 100°C in order to obtain a shear force as high as possible. The first temperature is preferably 0 to 50°C, and more preferably 5 to 30°C. The first temperature may be set by adjusting the temperature of the chamber 18 or the temperature of the first rotor 12 and the second rotor 14. The velocity ratio and the temperature may be controlled while measuring the temperature of the mixture. When performing the first mixing step using the internal mixer 11, the internal mixer 11 may be set at the first temperature in advance.

When using a nonpolar ethylene-propylene-diene copolymer rubber (EPDM) as the ethylene-propylene rubber 200, the second carbon nanofibers 220 are dispersed in the entire ethylene-propylene rubber 200 by the first mixing step although aggregates remain.

### Second mixing step

In the second mixing step, the mixture obtained by the first mixing step is supplied to another internal mixer. The second mixing step is performed at the second temperature that is higher than the first temperature by 50 to 100°C in order to produce radicals by cutting the ethylene-propylene rubber molecules. The temperature of the internal mixer used in the second mixing step is increased to the second temperature using a heater provided in the rotor or a heater provided in the chamber, so that the second mixing step can be performed at the second temperature higher than the first temperature. The second temperature may be appropriately selected depending on the type of ethylene-propylene rubber, but is preferably 50 to 150°C. The ethylene-propylene rubber molecules are cut and produce radicals by performing the second mixing step, so that the carbon nanofibers are easily bonded to the radicals of the ethylene-propylene rubber molecules.

### Third mixing step

A mixture 36 obtained by the second mixing step is supplied to open rolls 30 set at the first temperature, and the third mixing step (tight-milling step) is performed 1 to 10 times to sheet the mixture 36 (see FIG. 2). The distance d (nip) between a first roll 32 and a second roll 34 is set to 0 to 0.5 mm (e.g., 0.3 mm) so that a shear force higher than that of the first and second mixing steps is obtained. The rolls are set at a third temperature of 0 to 50°C, and preferably 5 to 30°C in the same manner as in the first mixing step. When the surface velocity of the first roll 32 is referred to as VI, and the surface velocity of the second roll 34 is referred to as V2, the surface velocity ratio (V1/V2) of the first roll 32 to the second roll 34 during tight milling is preferably 1.05 to 3.00, and more preferably 1.05 to 1.2. A desired shear force can be applied by utilizing such a surface velocity ratio. The tight-milled mixture 36 is sheeted (rolled) using the rolls. The third mixing step more uniformly disperses the second carbon nanofibers in the ethylene-propylene rubber. The third mixing step is effective when more uniform dispersibility is required. The third mixing step (tight-milling step) causes the ethylene-propylene rubber that has produced radicals to remove the second carbon nanofibers one by one, so that the second carbon nanofibers can be further dispersed. A vulcanizing agent (crosslinking agent) may be added and uniformly dispersed in the third mixing step.

The second carbon nanofibers can be dispersed in the entire ethylene-propylene rubber due to a high shear force by performing the first mixing step at the first temperature, and aggregates of the second carbon nanofibers can be disentangled due to radicals produced by the ethylene-propylene rubber molecules by performing the second mixing step at the second temperature and performing the third mixing step at the first temperature. According to this embodiment, when the mixture is extruded through the narrow space between the rolls in the third mixing step, the mixture is deformed to have a thickness larger than the roll distance as a result of the restoring force of the ethylene-propylene rubber due to its elasticity. It is considered that the above deformation causes the mixture to which a high shear force is applied to flow in a complicated manner, so that the second carbon nanofibers are dispersed in the ethylene-propylene rubber. The second carbon nanofibers that have been dispersed in the ethylene-propylene rubber do not re-aggregate due to chemical interaction with the ethylene-propylene rubber, so that excellent dispersion stability can be obtained. Therefore, even when using a nonpolar ethylene-propylene rubber (e.g., EPDM), it is possible to produce a piping component seal member in which the second carbon nanofibers are dispersed in the entire piping component seal member without aggregating. Moreover, since the surface of the second carbon nanofibers has been moderately oxidized, the second carbon nanofibers have improved wettability with the ethylene-propylene rubber.

In the first and second mixing steps in which the second carbon nanofibers are dispersed in the ethylene-propylene rubber due to a shear force, it is preferable to use an internal mixer from the viewpoint of processability. Note that another mixer (e.g., open rolls) may also be used. As the internal mixer, a tangential or intermeshing mixer such as a Banbury mixer, a kneader, or a Brabender may be used. The first, second, and third mixing steps may also be performed using a multi-screw extrusion kneading method (e.g., twin-screw extruder) instead of the internal mixing method and the open-roll method. The mixers may be appropriately used in combination depending on the production volume and the like. It is particularly preferable to use the open-roll method in the third mixing step, since the actual temperature of the mixture can be measured and controlled in addition to the roll temperature.

A vulcanizing agent is added to the mixture that has been tight-milled and sheeted, or added to the mixture in an arbitrary mixing step. The mixture is then molded into the shape of a seal member required for a piping component using a rubber molding method (e.g., injection molding, transfer molding, press molding, extrusion molding, or calendering), and heated/cured by a mold curing method or the like to obtain a piping component seal member.

In the method of producing a piping component seal member according to this embodiment, a compounding ingredient normally used when processing an ethylene-propylene rubber may be added to the ethylene-propylene rubber. A known compounding ingredient may be used. Examples of the compounding ingredient include a crosslinking agent, a vulcanizing agent, a vulcanization accelerator, a vulcanization retarder, a softener, a plasticizer, a curing agent, a reinforcing agent, a filler, an aging preventive, a colorant, and the like. These compounding ingredients may be added to the ethylene-propylene rubber before or after supplying the second carbon nanofibers to the open rolls, for example.

### (V) Piping component seal member

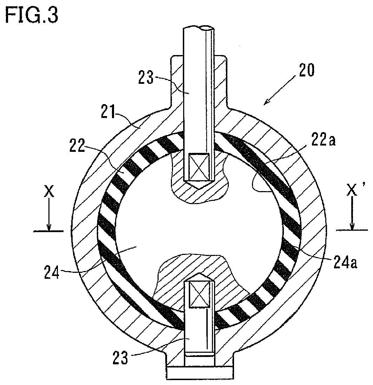

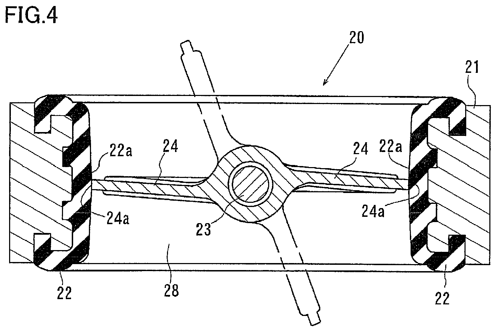

The piping component seal member is described below with reference to FIGS. 3 and 4.

FIG. 3 is a vertical cross-sectional view illustrating a schematic configuration of a butterfly valve that is one embodiment of the piping component. FIG. 4 is a cross-sectional view taken along a line X-X' in FIG. 3 and illustrating the opening/closing operation of the butterfly valve that is one embodiment of the piping component.

The piping component seal member may be used for a piping component such as a fluid pipe or a valve that opens and closes a fluid passage. A schematic configuration of the piping component seal member is described below using a butterfly valve 20 illustrated in FIGS. 3 and 4 that is one embodiment of a piping component. The butterfly valve 20 has a configuration in which a circular seal member 22 (may be referred to as a sheet ring, sheet rubber, rubber liner, or rubber sheet) produced by the method described in (IV) is provided on the inner circumferential surface of a cylindrical body 21 that is formed of a rigid material (e.g., metal), and a disk 24 is disposed inside the seal member 22. Columnar stems 23 are provided along the centerline of the disk 24 to protrude from the disk 24 in the vertical direction. The stems 23 are rotatably disposed through the body 21 and the seal member 22. An outer circumferential surface 24a of the disk 24 is pressed against a seal surface 22a (inner circumferential surface) of the seal member 22 by rotating the disk 24, so that the valve is closed. Therefore, a fluid passage 28 inside the valve can be opened and closed by rotating the disk 24 around the vertical axis of the stems 23. According to the butterfly valve 20 having the above structure, the seal member 22 has a large fluid contact area, and the effect of a lubricant is easily reduced within a short time. Moreover, the disk 24 is strongly pressed against the seal member 22 during the slide operation. Therefore, removal of a black component due to deterioration of the seal member 22 caused by chlorine tends to occur. However, removal of a black component can be reduced by utilizing the piping component seal member 22 having excellent chlorine resistance.

Note that the term "piping component" refers to a valve such as a sluice valve, a spherical valve, a needle valve, a check valve, a ball valve, a cock, a butterfly valve, a diaphragm valve, a safety valve, an escape valve, a reducing valve, a control valve, a steam trap, a solenoid valve, a vent valve, and a water tap, and a joint such as a screwed joint, a weld joint, a fused joint, a bonded joint, a quick-connecting fluid coupling, a bite-type joint, a tightening joint, an expansion joint, a clamp joint, a one-touch joint, a sliding joint, a compression joint, an expanding joint, a rolled thread joint, an insertion joint, a coupling joint, a housing joint, and a flexible joint.

The piping component seal member includes an ethylene-propylene rubber, surface-oxidized second carbon nanofibers, and carbon black having an average particle diameter of 50 nm to 10 micrometers, and exhibits excellent chlorine resistance. The piping component seal member includes an ethylene-propylene rubber, and carbon nanofibers having a surface oxygen concentration measured by X-ray photoelectron spectroscopy (XPS) of 2.6 to 4.6 atm%. The second carbon nanofibers are uniformly dispersed in the ethylene-propylene rubber. Since the second carbon nanofibers have been oxidized, the second carbon nanofibers exhibit improved wettability with the ethylene-propylene rubber, so that the piping component seal member exhibits improved rigidity and flexibility. In particular, since the surface-oxidized carbon nanofibers and the carbon black having an average particle diameter of 50 nm to 10 micrometers are relatively stable upon contact with chlorine, chlorine ions, hypochlorous acid, and hypochlorite ions, the piping component seal member exhibits excellent chlorine resistance. It is preferable that the piping component seal member includes 5 to 50 parts by mass of the carbon nanofibers and 10 to 120 parts by mass of the carbon black based on 100 parts by mass of the ethylene-propylene rubber, from the viewpoint of reinforcement, processability, and economic efficiency.

A piping component seal member having excellent oil resistance according to one embodiment of the invention, a method of producing a piping component seal member having excellent oil resistance according to one embodiment of the invention, and a piping component according to one embodiment of the invention are described below.

A piping component seal member having excellent oil resistance according to one embodiment of the invention includes an ethylene-propylene rubber, 5 to 70 parts by mass of carbon nanofibers based on 100 parts by mass of the ethylene-propylene rubber, and 0 to 120 parts by mass of carbon black based on 100 parts by mass of the ethylene-propylene rubber, the total amount of the carbon nanofibers and the carbon black being 50 to 190 parts by mass.

A piping component according to one embodiment of the invention includes a seal member having excellent oil resistance, the seal member including an ethylene-propylene rubber, 5 to 70 parts by mass of carbon nanofibers based on 100 parts by mass of the ethylene-propylene rubber, and 0 to 120 parts by mass of carbon black based on 100 parts by mass of the ethylene-propylene rubber, the total amount of the carbon nanofibers and the carbon black being 50 to 190 parts by mass.

### (VI) Carbon nanofibers

The carbon nanofibers are produced by a vapor growth method, for example. The vapor growth method pyrolyzes gas (e.g., hydrocarbon gas) in the presence of a metal catalyst to produce carbon nanofibers. As the vapor growth method, a method that introduces an organic compound (e.g., benzene or toluene) (i.e., raw material) and an organotransition metal compound (e.g., ferrocene or nickelocene) (i.e., metal catalyst) into a reaction furnace set at a high temperature (e.g., 400 to 1000°C) together with a carrier gas to produce carbon nanofibers on a substrate, a method that produces carbon nanofibers in a floating state, a method that causes carbon nanofibers to be grown on the wall of the reaction furnace, or the like may be used. Alternatively, metal-containing particles supported on a fire-resistant support (e.g., alumina or carbon) may be caused to come in contact with a carbon-containing compound at a high temperature to obtain carbon nanofibers having an average diameter of 70 nm or less. The carbon nanofibers produced by the vapor growth method preferably have an average diameter of 4 to 250 nm.

The carbon nanofibers produced by the vapor growth method may be heated at 2000 to 3200°C in an inert gas atmosphere. The heating temperature is more preferably 2500 to 3200°C, and particularly preferably 2800 to 3200°C. If the heating temperature is 2000°C or more, impurities such as amorphous products deposited on the surface of the carbon nanofibers during vapor growth and the remaining metal catalyst can be removed. If the heating temperature is 2500°C or more, the skeleton of the carbon nanofibers is graphitized (crystallized) so that defects of the carbon nanofibers are reduced, whereby the strength of the carbon nanofibers is improved. If the heating temperature is 3200°C or less, breakage of the graphite skeleton due to graphite sublimation occurs to only a small extent.

Examples of the carbon nanofibers include a carbon nanotube and the like. The carbon nanotube has a structure in which a graphite hexagonal carbon layer is rolled in one or more layers. A carbon material having a partial carbon nanotube structure may also be used. The carbon nanotube may also be referred to as a graphite fibril nanotube or a vapor-grown carbon fiber.

The carbon nanofibers may be subjected to a surface treatment before being mixed into the ethylene-propylene rubber. For example, the carbon nanofibers produced by a vapor growth method may be surface-oxidized. The carbon nanofibers that have been graphitized may be surface-oxidized. The surface oxidation treatment may be performed so that the surface oxygen concentration of the untreated carbon nanofibers measured by X-ray photoelectron spectroscopy (XPS) is higher than that of the treated carbon nanofibers by 0.5 to 2.6 atm%. The surface oxidation treatment may be performed so that the surface oxygen concentration of the untreated carbon nanofibers measured by X-ray photoelectron spectroscopy (XPS) is higher than that of the treated carbon nanofibers by 20 to 120%. The carbon nanofibers obtained by the surface oxidation treatment may have a surface oxygen concentration measured by X-ray photoelectron spectroscopy (XPS) of 2.6 to 4.6 atm%. As the surface oxidation treatment, the carbon nanofibers may be heated at 600 to 800°C in an oxygen-containing atmosphere. For example, the carbon nanofibers may be placed in a furnace containing air, and heated at a predetermined temperature within the range of 600 to 800°C to obtain carbon nanofibers having a surface that has been oxidized to the desired oxygen concentration.

For example, carbon nanofibers produced by the vapor growth method may be heated at a temperature that is in the range of 1100 to 1600°C and is higher than the reaction temperature of the vapor growth method without graphitizing the carbon nanofibers. Since the carbon nanofibers that have been heated as described above appropriately have non-crystalline areas on the surface, the carbon nanofibers exhibit excellent wettability with the ethylene-propylene rubber. Moreover, since the number of defects is relatively small, the carbon nanofibers exhibit sufficient strength.

### (VII) Carbon black

As the carbon black having an average particle diameter of 10 nm to 10 micrometers, carbon black of various grades produced using various raw materials may be used either individually or in combination. It is preferable that the primary particles of the carbon black have an average particle diameter of 10 to 150 nm. Since the ethylene-propylene rubber system can be divided by the carbon black, the amount of the ethylene-propylene rubber and the amount of the carbon nanofibers can be reduced (i.e., it is economical).

### (VIII) Ethylene-propylene rubber

It is preferable to use an ethylene-propylene-diene copolymer (EPDM) as the ethylene-propylene rubber. In order to obtain heat resistance, cold resistance, and a seal capability required for the piping component seal member, the ethylene-propylene rubber preferably includes a third component such as ethylidenenorbornene, and is preferably an EPDM having an ethylene content of 45 to 80%. The weight average molecular weight of the ethylene-propylene rubber is preferably 50,000 or more, more preferably 70,000 or more, and particularly preferably about 100,000 to about 500,000. If the molecular weight of the ethylene-propylene rubber is within the above range, the ethylene-propylene rubber molecules are entangled and linked, so that the ethylene-propylene rubber easily enters the space between the aggregated carbon nanofibers. Therefore, an effect of separating the carbon nanofibers is improved. If the molecular weight of the ethylene-propylene rubber is less than 5000, the ethylene-propylene rubber molecules may not be sufficiently entangled, so that an effect of dispersing the carbon nanofibers may be small even if a shear force is applied in a step described later. If the molecular weight of the ethylene-propylene rubber is more than 5,000,000, the ethylene-propylene rubber may be too hard, so that the processability of the ethylene-propylene rubber may deteriorate.

### (IX) Method of producing piping component seal member

The method of producing a piping component seal member includes mixing carbon black and carbon nanofibers into an ethylene-propylene rubber, and dispersing the carbon black and the second carbon nanofibers in the ethylene-propylene rubber by applying a shear force.

The ethylene-propylene rubber and the carbon nanofibers may be supplied to a mixer such as open rolls, a single-screw or twin-screw extruder, a Banbury mixer, or a kneader, and mixed. The filler (e.g., carbon black) other than the carbon nanofibers is preferably supplied to the mixer before supplying the carbon nanofibers. The step of mixing the ethylene-propylene rubber, the carbon black, and the second carbon nanofibers may be performed in the same manner as the second step described in (IV), and may include a first mixing step of mixing the ethylene-propylene rubber, the carbon black, and the carbon nanofibers at a first temperature, a second mixing step of mixing the mixture obtained by the first mixing step at a second temperature, and a third mixing step of tight-milling the mixture obtained by the second mixing step. In this embodiment, reference numeral 220 in FIG. 1 indicates carbon nanofibers. The method of producing a piping component seal member is the same as the method described in (IV) (see FIGS. 1 and 2). Therefore, description thereof is omitted.

### (X) Piping component seal member and butterfly valve

The piping component seal member according to one embodiment of the invention may be applied to the piping component seal member and the butterfly valve illustrated in FIGS. 3 and 4 (refer to (V)). Therefore, description thereof is omitted.

The piping component according to one embodiment of the invention may be any of the piping components described in (V).

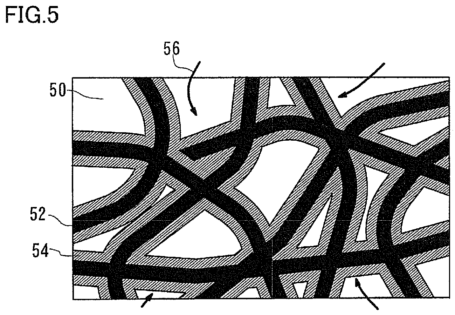

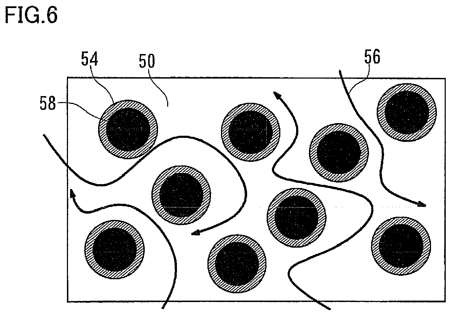

The piping component seal member obtained in (IX) includes an ethylene-propylene rubber, 5 to 70 parts by mass of carbon nanofibers based on 100 parts by mass of the ethylene-propylene rubber, and 0 to 120 parts by mass of carbon black based on 100 parts by mass of the ethylene-propylene rubber, the total amount of the carbon nanofibers and the carbon black being 50 to 190 parts by mass. The oil resistance of the piping component seal member is described below with reference to FIGS. 5 and 6. FIG. 5 is a schematic enlarged view illustrating part of the cross section of the piping component seal member. FIG. 6 is a schematic enlarged view illustrating part of the cross section of a related-art piping component seal member.

As illustrated in FIG. 6, the related-art piping component seal member is reinforced by carbon black 58. Therefore, oil enters an ethylene-propylene rubber 50 (see arrow 56), so that swelling occurs. In the piping component seal member according to one embodiment of the invention illustrated in FIG. 5, carbon nanofibers 52 dispersed in an ethylene-propylene rubber 50 and a bound rubber interfacial phase 54 formed around the carbon nanofibers 52 form a network, so that entrance of the oil (see arrow 56) is prevented. Moreover, since the movement of the ethylene-propylene rubber 50 is limited due to the network formed by the carbon nanofibers 52 and the interfacial phase 54, swelling of the ethylene-propylene rubber 50 due to entrance of the oil can be physically suppressed. In FIG. 5, carbon black is omitted for convenience of illustration.

Since the piping component seal member is reinforced by the carbon nanofibers, the piping component seal member has basic physical strength required for the piping component seal member. Moreover, the coefficient of friction can be reduced. This is considered to be because a number of high modulus areas formed of the carbon nanofibers and the interfacial phase are scattered on the surface of the seal member, and protrude from the surface of the seal member to form elevations and depressions. For example, when applying the piping component seal member having a small coefficient of friction to the butterfly valve 20 in which almost the entire outer circumferential surface 24a of the disk 24 comes in contact with the inner circumferential surface 22a of the seal member 22, the rotation torque of the disk 24 can be reduced, so that energy can be saved. Moreover, since wear of the piping component seal member can be reduced by reducing the coefficient of friction of the surface of the piping component seal member, the life of the piping component seal member is expected to increase.

The amounts of the carbon nanofibers and the carbon black mixed into the ethylene-propylene rubber may be appropriately adjusted depending on the degree of reinforcement required for the application of the piping component seal member, and the amount of an additional filler. For example, the oil resistance can be increased, and the coefficient of friction can be reduced by increasing the amount of the carbon nanofibers. However, since the carbon nanofibers are expensive, it is preferable to use carbon black together with the carbon nanofibers from the viewpoint of economic efficiency. The piping component seal member includes 5 to 70 parts by mass of the carbon nanofibers based on 100 parts by mass of the ethylene-propylene rubber, and 0 to 120 parts by mass of the carbon black based on 100 parts by mass of the ethylene-propylene rubber, the total amount of the carbon nanofibers and the carbon black being 50 to 190 parts by mass. The amount of the carbon nanofibers is preferably 15 to 65 parts by mass. If the amount of the carbon nanofibers is 5 parts by mass or more, the ethylene-propylene rubber can be reinforced by increasing the amount of the carbon black while achieving oil resistance and a small coefficient of friction. If the amount of the carbon nanofibers is 70 parts by mass or less, a moderate hardness can be obtained by reducing the amount of the carbon black. Moreover, processing is facilitated.

### EXAMPLES

The invention is further described below by way of examples. Note that the invention is not limited to the following examples.

The chlorine resistance was evaluated using the piping component seal member samples of Examples 1 to 4 and Comparative Examples 1 to 5.

### (1) Surface oxidation of carbon nanofibers

(1-1) A spray nozzle was installed at the top of a vertical heating furnace (inner diameter: 17.0 cm, length: 150 cm). The inner wall temperature (reaction temperature) of the heating furnace was increased to and maintained at 1000°C. A liquid raw material (i.e., benzene containing 4 wt% of ferrocene) (20 g/min) was supplied from the spray nozzle together with hydrogen gas (100 l/min) so that the raw material was directly sprayed onto the wall of the furnace. The spray nozzle had a conical shape (trumpet shape or umbrella shape). The vertex angle of the nozzle was 60°. Ferrocene was pyrolyzed under the above conditions to produce iron particles. The iron particles served as seeds so that carbon nanofibers were produced and grown from carbon produced by pyrolysis of benzene. The carbon nanofibers were continuously produced by this method over one hour while scraping off the carbon nanofibers at intervals of five minutes.
   The carbon nanofibers thus produced by the vapor growth method were heated at 2800°C in an inert gas atmosphere to graphitize the carbon nanofibers. The graphitized (untreated) carbon nanofibers ("CNT-N" in Table 1) had an average diameter of 87 nm, an average length of 10 micrometers, a Raman peak ratio (D/G) of 0.08, a specific surface area by nitrogen adsorption of 25 m²/g, and a surface oxygen concentration of 2.1 atm%.
(1-2) 100 g of the graphitized first carbon nanofibers were placed in a heating furnace ("AMF-20N" manufactured by ASH) containing air, and oxidized at a temperature (575 to 720°C) and for a time (1 to 2 hours) shown in Table 1 to obtain second carbon nanofibers.

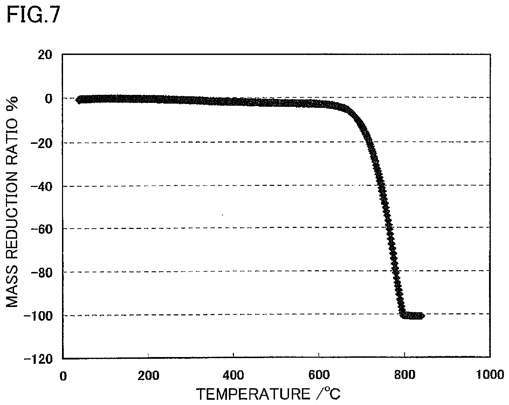

The temperature of the heating furnace was set based on the results for a reduction in mass of the first carbon nanofibers measured by thermogravimetry (TG). Specifically, a reduction in mass when increasing the temperature of the first carbon nanofibers in air was measured, and a change in mass of the second carbon nanofibers with respect to temperature was determined (see FIG. 7). The temperature rise rate was 10°C /min, and the atmosphere was air (compressed air (200 ml/min)). The heating furnace was set to a temperature shown in Table 1 within the range from 600°C (at which the mass of the first carbon nanofibers started to decrease (i.e., the first carbon nanofibers were oxidized) to 800°C (at which a reduction in mass of the first carbon nanofibers was 100% (the first carbon nanofibers were burned out) to obtain five types of second carbon nanofibers. In Table 1, these second carbon nanofibers are indicated by "CNT-A (575°C)", "CNT-B (615°C)", "CNT-C (650°C)", "CNT-D (690°C)", and "CNT-E (720°C)" (the temperature in parenthesis indicates the temperature of the heating furnace). The actual temperature inside the heating furnace was ±30°C with respect to the set temperature.

The Raman peak ratio (D/G), the specific surface area by nitrogen adsorption, and the surface oxygen concentration of the five types of second carbon nanofibers were measured. The results are shown in Table 1. An increase amount (c=b-a) and an increase rate (d=100·c/a) of the surface oxygen concentration (b) of the second carbon nanofibers with respect to the surface oxygen concentration (a) of the unoxidized first carbon nanofibers ("CNT-N") were also calculated based on the measurement results for the surface oxygen concentration of the first and second carbon nanofibers. The results are shown in Table 1. The ratio (D/G) of the peak intensity D at around 1300 cm⁻¹ to the peak intensity G at around 1600 cm⁻¹ of the second carbon nanofibers was measured by Raman scattering spectroscopy using a measuring instrument "HOLOLAB-5000" (manufactured by Kaiser Optical System, 532 nm ND: YAG). The specific surface area by nitrogen adsorption (m²/g) of the second carbon nanofibers was measured using a measuring instrument "NOVA 3000" (nitrogen gas) (manufactured by Yuasa-Ionics Co., Ltd.). The surface oxygen concentration of the second carbon nanofibers was measured by X-ray photoelectron spectroscopy (XPS). Specifically, the second carbon nanofibers were sprinkled over and caused to adhere to a carbon tape on a metal stage. After removing the second carbon nanofibers that did not adhere to the carbon tape, the metal stage was installed in an XPS apparatus. A microanalysis X-ray photoelectron spectroscopy apparatus "JPS-9200" manufactured by JEOL Ltd. was used to measure the oxygen concentration. The second carbon nanofibers (powder sample) were subjected to argon gas etching (argon gas concentration: 8×10⁻² Pa) for 0.5 minutes to expose the surface of the second carbon nanofibers. The surface oxygen concentration of the second carbon nanofibers was then measured (analysis diameter of X-ray source: 1 mm, anticathode: Al/Mg twin target, accelerating voltage: 10 kV, emission current: 30 mA). Oxygen and carbon were detected by XPS from the surface of the second carbon nanofibers.

**TABLE 1**

| Temperature of heating furnace | °C | - | 575 | 615 | 650 | 690 | 720 |
|---|---|---|---|---|---|---|---|
| Heat treatment (holding) time in heating furnace | hour | - | 1 | 2 | 2 | 2 | 2 |
| Carbon nanofibers | | CNT-N | CNT-A | CNT-B | CNT-C | CNT-D | CNT-E |
| Mass residual ratio | mass% | 100 | 99 | 97.3 | 88.9 | 83.8 | 70 |
| Raman peak ratio | (D/G) | 0.08 | 0.10 | 0.14 | 0.19 | 0.21 | 0.23 |
| Specific surface area by nitrogen adsorption | m²/g | 25 | 30 | 37 | 43 | 53 | 63 |
| Oxygen concentration | atm% | 2.1 | 2.5 | 3.2 | 3.5 | 3.6 | 4.8 |
| Increase amount of oxygen concentration | atm% | - | 0.4 | 1.1 | 1.4 | 1.5 | 2.7 |
| Increase rate of oxygen concentration | % | - | 19% | 52% | 67% | 71% | 129% |

### (2) Production of seal member samples of Examples 1 to 4 and Comparative Examples 1 to 5

Samples of Examples 1 to 4 and Comparative Examples 1 to 4 were produced as follows. An ethylene-propylene rubber in an amount shown in Tables 2 and 3 was supplied to open rolls (roll temperature: 20°C). After the addition of carbon black, carbon nanofibers, oil, and the like, the components were mixed, subjected to the first mixing step, and removed from the rolls. The mixture was again supplied to the open rolls (roll temperature: 100°C), subjected to the second mixing step, and removed from the rolls.

The mixture was wound around the open rolls (roll temperature: 10 to 20°C, roll distance: 0.3 mm), and tight-milled five times. The surface velocity ratio of the rolls was set to 1.1. After setting the roll distance to 1.1 mm, the mixture obtained by tight milling was supplied to the rolls, and sheeted.

Separately, an organic peroxide and a crosslinking agent were mixed into the uncrosslinked sheet obtained by tight milling. The mixture was supplied to the open rolls (roll distance: 1.1 mm), and sheeted. The sheet was cut into a die size, placed in a die, and compression-molded at 175°C and 100 kgf/cm² for 20 minutes to obtain crosslinked piping component seal member samples (thickness: 1 mm) of Examples 1 to 4 and Comparative Examples 1 to 4.

In Tables 2 and 3, "SRF-CB" indicates SRF carbon black having an average particle diameter of 69 nm, "MT-CB" indicates MT carbon black having an average particle diameter of 122 nm, and "EPDM" indicates an ethylene-propylene-diene copolymer (EPDM) "EP24" (manufactured by JSR Corporation, Mooney viscosity (ML₁₊₄,125°C): 42, ethylene content: 54 mass%, diene content: 4.5 mass%). In Tables 2 and 3, "CNT-C" indicates the second carbon nanofibers (surface oxygen concentration: 3.5 atm%) obtained in (1), and "CNT-N" indicates the non-oxidized first carbon nanofibers. In Tables 2 and 3, "CNT-F" indicates the carbon nanofibers produced by the vapor growth method in (1-1) and heated in an inert gas atmosphere at a temperature (1200°C) higher than the reaction temperature of the vapor growth method so that wettability with the matrix was improved. The carbon nanofibers CNT-F were used to produce the seal member sample of Comparative Example 2.

**TABLE 2**

| | | | | Example 1 | Example 2 | Example 3 | Example 4 |
|---|---|---|---|---|---|---|---|
| Composition of valve seal member | Rubber | EPDM | phr | 100 | 100 | 100 | 100 |
| | Carbon nanofibers | CNT-C | phr | 20 | 10 | 20 | 40 |
| | | CNT-N | phr | 0 | 0 | 0 | 0 |
| | | CNT-F | phr | 0 | 0 | 0 | 0 |
| | Carbon black | SRF-CB | phr | 0 | 90 | 70 | 15 |
| | | MT-CB | phr | 70 | 0 | 0 | 0 |
| | Other additives | Processed oil | phr | 5 | 5 | 5 | 5 |
| | | Organic peroxide | phr | 2.5 | 2.5 | 2.5 | 2.5 |
| | | Co-crosslinking agent | phr | 3 | 3 | 3 | 3 |

**TABLE 3**

| | | | | Comparative Example 1 | Comparative Example 2 | Comparative Example 3 | Comparative Example 4 |
|---|---|---|---|---|---|---|---|
| Composition of valve seal member | Rubber | EPDM | phr | 100 | 100 | 100 | 100 |
| | Carbon nanofibers | CNT-C | phr | 0 | 0 | 0 | 0 |
| | | CNT-N | phr | 0 | 0 | 20 | 0 |
| | | CNT-F | phr | 0 | 0 | 0 | 20 |
| | Carbon black | SRF-CB | phr | 0 | 90 | 70 | 70 |
| | | MT-CB | phr | 110 | 0 | 0 | 0 |
| | Other additives | Processed oil | phr | 5 | 5 | 5 | 5 |
| | | Organic peroxide | phr | 2.5 | 2.5 | 2.5 | 2.5 |
| | | Co-crosslinking agent | phr | 3 | 3 | 3 | 3 |

As Comparative Example 5, a sheet-like sample produced in the same manner as a known butterfly valve seal member was used. The following measurements were performed. The known seal member was produced by mixing predetermined amounts of FEF (average particle diameter: 43 nm) and HAF (average particle diameter: 28 nm) with EPDM.

### (3) Measurement of hardness (Hs)

The rubber hardness (JIS-A) of the piping component seal member samples of Examples 1 to 4 and Comparative Examples 1 and 5 was measured in accordance with JIS K 6253. The measurement results are shown in Tables 4 and 5.

### (4) Measurement of tensile strength (Tb) and elongation at break (Eb)

Specimens prepared by cutting the piping component seal member samples of Examples 1 to 4 and Comparative Examples 1 to 5 in the shape of a 1A dumbbell were subjected to a tensile test in accordance with JIS K 6251 at a temperature of 23±2°C and a tensile rate of 500 mm/min using a tensile tester (manufactured by Toyo Seiki Seisaku-sho, Ltd.) to measure the tensile strength (MPa) and the elongation at break (%). The measurement results are shown in Tables 4 and 5.

### (5) Measurement of 100% modulus (M100)

The piping component seal member samples (width: 5 mm, length: 50 mm, thickness: 1 mm) of Examples 1 to 4 and Comparative Examples 1 to 5 were stretched at a rate of 10 mm/min, and the stress (M100: 100% modulus (MPa)) when the sample was deformed by 100% was determined. The measurement results are shown in Tables 4 and 5.

### (6) Measurement of tear strength

Unnicked angle specimens were obtained in accordance with JIS K 6252 by punching the piping component seal member samples of Examples 1 to 4 and Comparative Examples 1 to 5, and subjected to a tear test in accordance with JIS K 6252 to measure the tear strength (N/mm). The results are shown in Tables 4 and 5.

### (7) Chlorine resistance test

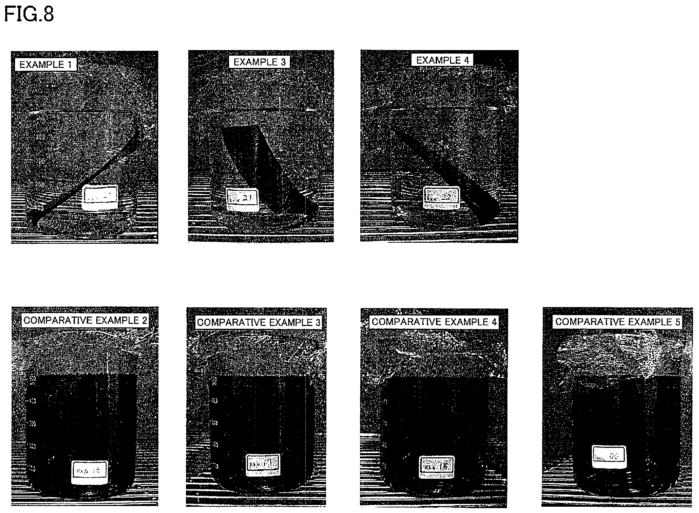

A sodium chlorite aqueous solution having a chloride concentration of 200 ppm and a pH of 9±0.5 was prepared. The piping component seal member samples of Examples 1 to 4 and Comparative Examples 1 to 5 were immersed in the aqueous solution at 60°C for 1004 hours (five times (working days) per week, the aqueous solution was exchanged with a new aqueous solution every 24 hours). A change in appearance due to 1004 hours of immersion was observed with the naked eye, and the residual chlorine concentration in the aqueous solution prepared when 980 hours had elapsed, was measured after an additional 24 hours had elapsed. The results are shown in Tables 4 and 5. FIG. 8 illustrates photographs of the aqueous solution after immersing the samples for 1004 hours.

**TABLE 4**

| | | | Example 1 | Example 2 | Example 3 | Example 4 |
|---|---|---|---|---|---|---|
| Properties of sheet | Hardness | JIS-A | 79 | 76 | 80 | 83 |
| | Tensile strength | MPa | 13.4 | 15.1 | 14.2 | 13.3 |
| | Elongation at break | % | 200 | 180 | 160 | 210 |
| | M100 | MPa | 6.8 | 7.2 | 8.7 | 9.0 |
| | Tear strength | N/mm | 18.9 | 18.5 | 20.3 | 30.4 |
| Chlorine resistance test | Chlorine concentration after 1004 hours | ppm | 170 | 140 | 160 | 120 |

**TABLE 5**

| | | | Comparative Example 1 | Comparative Example 2 | Comparative Example 3 | Comparative Example 4 | Comparative Example 5 |
|---|---|---|---|---|---|---|---|
| Properties of sheet | Hardness | JIS-A | 70 | 72 | 80 | 82 | 77 |
| | Tensile strength | MPa | 11.8 | 17.1 | 15.5 | 16.8 | 18.7 |
| | Elongation at break | % | 180 | 200 | 200 | 108 | 260 |
| | M100 | MPa | 5.5 | 5.5 | 6.7 | 14.1 | 3.8 |
| | Tear strength | N/mm | 8.0 | 11.1 | 19.1 | 11.0 | 13.8 |
| Chlorine resistance test | Chlorine concentration after 1004 hours | ppm | 170 | 100 | 50 | 20 | 40 |

As is clear from Tables 4 and 5 and FIG. 8, it was confirmed that the piping component seal member samples of Examples 1 to 4 had excellent chlorine resistance as compared with the piping component seal member samples of Comparative Examples 2 to 5. The piping component seal member samples of Comparative Examples 1 and 2 containing SRF carbon black and MT carbon black as the reinforcing agent had excellent chlorine resistance. However, the piping component seal member samples of Comparative Examples 1 and 2 showed poor properties (e.g., tear strength) as compared with the sample of Comparative Example 5.

The oil resistance was evaluated using the piping component seal member samples of Examples 5 to 11 and Comparative Examples 6 to 9.

### (8) Production of carbon nanofibers

A spray nozzle was installed at the top of a vertical heating furnace (inner diameter: 17.0 cm, length: 150 cm). The inner wall temperature (reaction temperature) of the heating furnace was increased to and maintained at 1000°C. A liquid raw material (i.e., benzene containing 4 wt% of ferrocene) (20 g/min) was supplied from the spray nozzle together with hydrogen gas (100 l/min) so that the raw material was directly sprayed onto the wall of the furnace. The spray nozzle had a conical shape (trumpet shape or umbrella shape). The vertex angle of the nozzle was 60°. Ferrocene was pyrolyzed under the above conditions to produce iron particles. The iron particles served as seeds so that carbon nanofibers were produced and grown from carbon produced by pyrolysis of benzene. The carbon nanofibers were continuously produced by this method over one hour while scraping off the carbon nanofibers at intervals of five minutes.

The carbon nanofibers thus produced by the vapor growth method were heated at 2800°C in an inert gas atmosphere to graphitize the carbon nanofibers. The graphitized carbon nanofibers ("CNT-N" in Tables 6 and 7) had an average diameter of 87 nm, an average length of 10 micrometers, a Raman peak ratio (D/G) of 0.08, a specific surface area by nitrogen adsorption of 25 m²/g, and a surface oxygen concentration of 2.1 atm%.

Carbon nanofibers ("CNT-F" in Tables 6 and 7) that were produced by the vapor growth method, and heated in an inert gas atmosphere at a temperature (1200°C) higher than the reaction temperature of the vapor growth method so that wettability with the matrix was improved, had an average diameter of 87 nm, an average length of 10 micrometers, a Raman peak ratio (D/G) of 1.29, a tap density of 0.013 g, and a specific surface area by nitrogen adsorption of 35 m²/g.

100 g of the graphitized carbon nanofibers (CNT-N) were placed in a heating furnace ("AMF-20N" manufactured by Asahi Rika Seisakusho Co., Ltd.) containing air, and heated at 650°C for two hours to obtain surface-oxidized carbon nanofibers ("CNT-C" in Tables 6 and 7). The surface-oxidized carbon nanofibers had an average diameter of 87 nm, an average length of 10 micrometers, a Raman peak ratio (D/G) of 0.19, a specific surface area by nitrogen adsorption of 43 m²/g, and a surface oxygen concentration of 2.1 atm%.

The Raman peak ratio (D/G) of the peak intensity D at around 1300 cm⁻¹ to the peak intensity G at around 1600 cm⁻¹ of the carbon nanofibers was measured by Raman scattering spectroscopy using a measuring instrument "HOLOLAB-5000" (manufactured by Kaiser Optical System, 532 nm ND: YAG). The specific surface area by nitrogen adsorption (m²/g) was measured using a measuring instrument "NOVA 3000" (nitrogen gas) (manufactured by Yuasa-Ionics Co., Ltd.). The surface oxygen concentration of the carbon nanofibers was measured by X-ray photoelectron spectroscopy (XPS). Specifically, the carbon nanofibers were sprinkled over and caused to adhere to a carbon tape on a metal stage. After removing the carbon nanofibers that did not adhere to the carbon tape, the metal stage was installed in an XPS apparatus. A microanalysis X-ray photoelectron spectroscopy apparatus "JPS-9200" manufactured by JEOL Ltd. was used to measure the oxygen concentration. The carbon nanofibers (powder sample) were subjected to argon gas etching (argon gas concentration: 8×10⁻² Pa) for 0.5 minutes to expose the surface of the carbon nanofibers. The surface oxygen concentration of the carbon nanofibers was then measured (analysis diameter of X-ray source: 1 mm, anticathode: Al/Mg twin target, accelerating voltage: 10 kV, emission current: 30 mA). Oxygen and carbon were detected by XPS from the surface of the carbon nanofibers.

### (9) Production of seal member samples of Examples 5 to 11 and Comparative Examples 6 to 9

Samples of Examples 5 to 11 and Comparative Examples 6 to 8 were produced as follows. An ethylene-propylene rubber in an amount shown in Tables 6 and 7 was supplied to open rolls (roll temperature: 20°C). After the addition of carbon black, carbon nanofibers, oil, and the like, the components were masticated, subjected to the first mixing step, and removed from the rolls. The mixture was again supplied to the open rolls (roll temperature: 100°C), subjected to the second mixing step, and removed from the rolls.

The mixture was wound around the open rolls (roll temperature: 10 to 20°C, roll distance: 0.3 mm), and tight-milled five times. The surface velocity ratio of the rolls was set to 1.1. After setting the roll distance to 1.1 mm, the mixture obtained by tight milling was supplied to the rolls, and sheeted.

Separately, an organic peroxide and a crosslinking agent were mixed into the uncrosslinked sheet obtained by tight milling. The mixture was supplied to the open rolls (roll distance: 1.1 mm), and sheeted. The sheet was cut into a die size, placed in a die, and compression-molded at 175°C and 100 kgf/cm² for 20 minutes to obtain crosslinked piping component seal member samples (thickness: 1 mm) of Examples 5 to 11 and Comparative Examples 6 to 8.

In Tables 6 and 7, "HAF-CB" indicates HAF carbon black having an average particle diameter of 28 nm, "SRF-CB" indicates SRF carbon black having an average particle diameter of 69 nm, "MT-CB" indicates MT carbon black having an average particle diameter of 122 nm, "EPDM (EP103AF)" indicates an ethylene-propylene-diene copolymer (EPDM) "EP103AF" (manufactured by JSR Corporation, Mooney viscosity (ML₁₊₄,125°C): 91, ethylene content: 59 mass%, diene content: 4.5 mass%), and "EPDM (EP24)" indicates an ethylene-propylene-diene copolymer (EPDM) "EP24" (manufactured by JSR Corporation, Mooney viscosity (ML₁₊₄,125°C): 42, ethylene content: 54 mass%, diene content: 4.5 mass%).

As Comparative Example 9, a sheet-like sample produced in the same manner as a known butterfly valve seal member was used. The following measurements were performed. The known seal member was produced by mixing predetermined amounts of FEF (average particle diameter: 43 nm) and HAF (average particle diameter: 28 nm) with EPDM.

### (10) Measurement of hardness (Hs)

The rubber hardness (JIS-A) of JIS K 6251 dumbbell specimens prepared using the piping component seal member samples of Examples 5 to 11 and Comparative Examples 6 to 9 was measured in accordance with JIS K 6253 (spring-type hardness test (A)). The measurement results are shown in Tables 6 and 7.

### (11) Measurement of tensile strength (Tb) and elongation at break (Eb)

Specimens prepared by cutting the piping component seal member samples of Examples 5 to 11 and Comparative Examples 6 to 9 in the shape of a 1A dumbbell were subjected to a tensile test (pulled in the grain direction) in accordance with JIS K 6251 at a temperature of 23±2°C and a tensile rate of 500 mm/min using a tensile tester manufactured by Toyo Seiki Seisaku-sho, Ltd. to measure the tensile strength (MPa) and the elongation at break (%). The results are shown in Tables 6 and 7.

### (12) Measurement of 100% modulus (M100)

The piping component seal member samples (width: 5 mm, length: 50 mm, thickness: 1 mm) of Examples 5 to 11 and Comparative Examples 6 to 9 were stretched at a rate of 10 mm/min, and the stress (M100: 100% modulus (MPa)) when the sample was deformed by 100% was determined. The measurement results are shown in Tables 6 and 7.

### (13) Measurement of tear strength

Unnicked angle specimens were obtained in accordance with JIS K 6252 by punching the piping component seal member samples of Examples 5 to 11 and Comparative Examples 6 to 9, and subjected to a tear test (pulled in the grain direction) in accordance with JIS K 6252 to measure the tear strength (N/mm). The results are shown in Tables 6 and 7.

### (14) Oil resistance test

Specimens prepared using the piping component seal member samples of Examples 5 to 11 and Comparative Examples 6 to 9 were immersed in JIS K 6258 lubricating oil No. 1 (manufactured by SUNOCO) at 100°C for 70 hours. The hardness (see (3)) of each specimen was measured before and after immersion. The volume and the length of each specimen were also measured. The difference between the hardness before immersion and the hardness after immersion was calculated. The change rate of the measured value after immersion with respect to the measured value before immersion was calculated for the volume and the length of each specimen. The results are shown in Tables 6 and 7.

### (15) Friction test

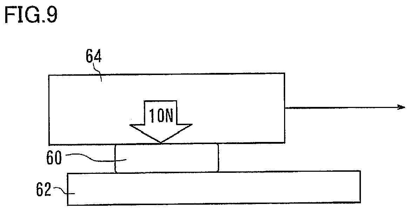

As illustrated in FIG. 9, a specimen 60 (width: 20 mm, length: 70 mm, thickness: 2 mm) of each of the piping component seal member samples of Examples 5 to 11 and Comparative Examples 6 to 9 was disposed on a disk 62 (material: SS14A, surface roughness (Ra): 0.18). A metal piece 64 was placed on the specimen 60, and the specimen 60 was pressed against the disk at 10 N. The metal piece was then pulled in the horizontal direction (rightward direction in FIG. 9) to measure the friction force, and the coefficient of static friction and the coefficient of dynamic friction were calculated. The results are shown in Tables 6 and 7.

**TABLE 6**

| | | Unit | Example 5 | Example 6 | Example 7 | Example 8 | Example 9 | Example 10 |
|---|---|---|---|---|---|---|---|---|
| Composition of valve seal member sample | EPDM (EP103AF) | phr | 100 | 100 | 0 | 0 | 0 | 0 |
| | EPDM (EP24) | phr | 0 | 0 | 100 | 100 | 100 | 100 |
| | CNT-N | phr | 60 | 20 | 20 | 0 | 0 | 0 |
| | CNT-F | phr | 0 | 0 | 0 | 20 | 0 | 0 |
| | CNT-C | phr | 0 | 0 | 0 | 0 | 20 | 40 |
| | HAF-CB | phr | 0 | 40 | 0 | 0 | 0 | 0 |
| | SRF-CB | phr | 0 | 0 | 70 | 70 | 70 | 15 |
| | MT-CB | phr | 0 | 0 | 0 | 0 | 0 | 0 |
| | Oil (PW90) | phr | 0 | 0 | 5 | 5 | 5 | 5 |
| Properties of sample | Hardness | Hs (JISA) | 88 | 82 | 80 | 78 | 80 | 83 |
| | Tensile strength | Tb (MPa) | 12.2 | 22.7 | 15.5 | 15.8 | 14.2 | 13.3 |
| | Elongation at break | Eb (%) | 262 | 243 | 200 | 180 | 160 | 210 |
| | M100 | M100 (MPa) | 7.8 | 5.8 | 6.7 | 8.4 | 8.7 | 9.0 |
| | Tear strength | N/mm | 41.2 | 21.9 | 19.1 | 15.4 | 20.3 | 30.4 |
| Oil resistance test (ASTM No. 1 oil, 100°C×70 hr) | Change in hardness | ΔHs (JIS A) | -13 | -13 | -28 | -24 | -13 | -21 |
| | Volume change rate | ΔV(%) | +60.7 | +66.2 | +79.4 | +79.0 | +72.1 | +64.7 |
| | Length change rate | ΔL(%) | +3 | +15 | +18 | +18 | +15 | +5 |
| Coefficient of static friction | | | 0.60 | 0.57 | 0.73 | 0.74 | 0.77 | 0.63 |
| Coefficient of dynamic friction | | | 0.47 | 0.51 | 0.72 | 0.70 | 0.73 | 0.66 |

**TABLE 7**

| | | Unit | Example 11 | Comparative Example 6 | Comparative Example 7 | Comparative Example 8 | Comparative Example 9 |
|---|---|---|---|---|---|---|---|
| Composition of valve seal member sample | EPDM (EP103AF) | phr | 0 | 100 | 6 | 0 | Existing sample |
| | EPDM (EP24) | phr | 100 | 0 | 100 | 100 | |
| | CNT-N | phr | 0 | 0 | 0 | 0 | |
| | CNT-F | phr | 0 | 0 | 0 | 0 | |
| | CNT-C | phr | 20 | 0 | 0 | 0 | |
| | HAF-CB | phr | 0 | 60 | 0 | 0 | |
| | SRF-CB | phr | 0 | 0 | 90 | 0 | |
| | MT-CB | phr | 70 | 0 | 0 | 110 | |
| | Oil (PW90) | phr | 5 | 0 | 5 | 5 | |
| Properties of sample | Hardness | Hs (JISA) | 79 | 73 | 72 | 70 | 77 |
| | Tensile strength | Tb (MPa) | 13.4 | 20.6 | 17.1 | 11.8 | 18.7 |
| | Elongation at break | Eb (%) | 200 | 213 | 200 | 180 | 260 |
| | M100 | M100 (MPa) | 6.8 | 4.4 | 5.5 | 5.5 | 3.8 |
| | Tear strength | N/mm | 18.9 | 12.9 | 11.1 | 8.0 | 13.8 |
| Oil resistance test (ASTM No. 1 oil, 100°C×70 hr) | Change in hardness | ΔHs (JIS A) | -17 | -15 | -32 | -19 | -22 |
| | Volume change rate | Δv(%) | +60.7 | +79.1 | +90.8 | +74.6 | +83.0 |
| | Length change rate | ΔL | +10 | +20 | +25 | +20 | +23 |
| Coefficient of static friction | | | 0.68 | 0.92 | 0.84 | 0.74 | 1.01 |
| Coefficient of dynamic friction | | | 0.62 | 0.78 | 0.84 | 0.70 | 0.88 |

As is clear from Tables 6 and 7, it was confirmed that the piping component seal member samples of Examples 5 to 11 had a small volume change rate and a small length change rate when subjected to the oil resistance test (i.e., swelled to only a small extent), and had excellent oil resistance as compared with the sample of Comparative Example 9. From the comparison between Examples 7 to 9 in which the same amount of carbon nanofibers was used, it was confirmed that the oil resistance increases as the surface wettability of the carbon nanofibers increases. Since the sample of Comparative Example 8 obtained using MT carbon black had excellent oil resistance, it was confirmed that excellent oil resistance is obtained when using carbon black having a large particle size as compared with the case of using carbon black having a small particle size. The samples of Examples 5 to 11 had a small coefficient of friction as compared with the sample of Comparative Example 9. The samples of Comparative Examples 6 to 8 had a low tear strength as compared with the sample of Comparative Example 9.

### REFERENCE SIGNS LIST

- 11: Internal mixer
- 12, 14: First and second rotors
- 20: Butterfly valve
- 22: Seal member
- 24: Disk
- 30: Open rolls
- 32, 34: First and second rolls
- 36: Mixture
- 60: Specimen
- 62: Disk
- 64: Metal piece
- 200: Ethylene-propylene rubber
- 212: Carbon black
- 220: Second carbon nanofibers or carbon nanofibers

## Claims

1. A piping component seal member having excellent chlorine resistance, the seal member comprising an ethylene-propylene rubber, surface-oxidized carbon nanofibers, and carbon black having an average particle diameter of 50 nm to 10 micrometers, wherein the carbon nanofibers have a surface oxygen concentration measured by X-ray photoelectron spectroscopy (XPS) of 2.6 to 4.6 atm%; wherein the carbon nanofibers have an average diameter of 20 nm to 230 nm.

2. The piping component seal member having excellent chlorine resistance according to claim 1, wherein the carbon nanofibers have an average diameter of 60 to 150 nm.

3. The piping component seal member having excellent chlorine resistance according to claim 1 or claim 2, the seal member comprising 5 to 50 parts by mass of the carbon nanofibers and 10 to 120 parts by mass of the carbon black based on 100 parts by mass of the ethylene-propylene rubber.

4. A method of producing a piping component seal member having excellent chlorine resistance, the method comprising a first step that includes oxidizing first carbon nanofibers produced by a vapor growth method to obtain surface-oxidized second carbon nanofibers, and a second step that includes mixing carbon black having an average particle diameter of 50 nm to 10 micrometers and the second carbon nanofibers into an ethylene-propylene rubber, and dispersing the carbon black and the second carbon nanofibers in the ethylene-propylene rubber by applying a shear force, wherein the second carbon nanofibers have a surface oxygen concentration measured by X-ray photoelectron spectroscopy (XPS) of 2.6 to 4.6 atm%; wherein the second carbon nanofibers have an average diameter of 20 nm to 230 nm.

5. The method of producing a piping component seal member having excellent chlorine resistance according to claim 4, wherein the first step is performed so that the surface oxygen concentration of the second carbon nanofibers measured by X-ray photoelectron spectroscopy (XPS) is higher than that of the first carbon nanofibers by 0.5 to 2.6 atm%.

6. The method of producing a piping component seal member having excellent chlorine resistance according to claim 4 or 5, wherein the first step is performed so that the surface oxygen concentration of the second carbon nanofibers measured by X-ray photoelectron spectroscopy (XPS) is higher than that of the first carbon nanofibers by 20 to 120%.

7. The method of producing a piping component seal member having excellent chlorine resistance according to any one of claims 4 to 6, wherein the first step includes heating the first carbon nanofibers at 600 to 800°C in an oxygen-containing atmosphere.

8. The method of producing a piping component seal member having excellent chlorine resistance according to any one of claims 4 to 7, wherein the first step includes reducing the mass of the first carbon nanofibers by 2 to 20% to obtain the second carbon nanofibers.

9. The method of producing a piping component seal member having excellent chlorine resistance according to any one of claims 4 to 8, wherein the second carbon nanofibers have an average diameter of 60 to 150 nm.

10. The method of producing a piping component seal member having excellent chlorine resistance according to any one of claims 4 to 9, wherein the second step includes mixing 5 to 50 parts by mass of the second carbon nanofibers and 10 to 120 parts by mass of the carbon black with 100 parts by mass of the ethylene-propylene rubber.

11. A piping component comprising the seal member having excellent chlorine resistance according to any one of claims 1 to 3.

## Patentansprüche

1. Dichtungselement für Rohrleitungskomponenten mit ausgezeichneter Chlorbeständigkeit, wobei das Dichtungselement einen Ethylen-Propylen-Kautschuk, oberflächenoxidierte Kohlenstoffnanofasern und Ruß mit einem mittleren Teilchendurchmesser von 50 nm bis 10 Mikrometer umfasst, wobei die Kohlenstoffnanofasern eine durch Röntgenphotoelektronenspektroskopie (XPS) gemessene Oberflächensauerstoffkonzentration von 2,6 bis 4,6 atm% aufweisen;
wobei die Kohlenstoffnanofasern einen mittleren Durchmesser von 20 nm bis 230 nm aufweisen.

2. Dichtungselement für Rohrleitungskomponenten mit ausgezeichneter Chlorbeständigkeit gemäß Anspruch 1,
wobei die Kohlenstoffnanofasern einen mittleren Durchmesser von 60 nm bis 150 nm aufweisen.

3. Dichtungselement für Rohrleitungskomponenten mit ausgezeichneter Chlorbeständigkeit gemäß Anspruch 1 oder Anspruch 2, wobei das Dichtungselement, bezogen auf 100 Gewichtsteile des Ethylen-Propylen-Kautschuks, 5 bis 50 Gewichtsteile der Kohlenstoffnanofasern und 10 bis 120 Gewichtsteile des Rußes umfasst.

4. Verfahren zur Herstellung eines Dichtungselements für Rohrleitungskomponenten mit ausgezeichneter Chlorbeständigkeit, wobei das Verfahren einen ersten Schritt umfasst, in dem die durch ein Aufdampfzüchtverfahren hergestellten ersten Kohlenstoffnanofasern oxidiert werden, um oberflächenoxidierte zweite Kohlenstoffnanofasern zu erhalten sowie einen zweiten Schritt, in dem Ruß mit einem mittleren Teilchendurchmesser von 50 nm bis 10 Mikrometer und die zweiten Kohlenstoffnanofasern zu einem Ethylen-Propylen-Kautschuk gemischt und die im Ethylen-Propylen-Kautschuk enthaltenen Rußteilchen und die zweiten Kohlenstoffnanofasern durch Aufbringen einer Scherkraft dispergiert werden, wobei die zweiten Kohlenstoffnanofasern eine durch Röntgenphotoelektronenspektroskopie (XPS) gemessene Oberflächensauerstoffkonzentration von 2,6 bis 4,6 atm% aufweisen; wobei die zweiten Kohlenstoffnanofasern einen mittleren Durchmesser von 20 nm bis 230 nm aufweisen.

5. Verfahren zur Herstellung eines Dichtungselements für Rohrleitungskomponenten mit ausgezeichneter Chlorbeständigkeit gemäß Anspruch 4,
wobei der erste Schritt so durchgeführt wird, dass die durch Röntgenphotoelektronenspektroskopie (XPS) gemessene Oberflächensauerstoffkonzentration der zweiten Kohlenstoffnanofasern um 0,5 bis 2,6 atm% höher ist als die der ersten Kohlenstoffnanofasern.

6. Verfahren zur Herstellung eines Dichtungselements für Rohrleitungskomponenten mit ausgezeichneter Chlorbeständigkeit gemäß Anspruch 4 oder 5,
wobei der erste Schritt so durchgeführt wird, dass die durch Röntgenphotoelektronenspektroskopie (XPS) gemessene Oberflächensauerstoffkonzentration der zweiten Kohlenstoffnanofasern um 20 bis 120 atm% höher ist als die der ersten Kohlenstoffnanofasern.

7. Verfahren zur Herstellung eines Dichtungselements für Rohrleitungskomponenten mit ausgezeichneter Chlorbeständigkeit gemäß einem der Ansprüche 4 bis 6,
wobei der erste Schritt das Erhitzen der ersten Kohlenstoffnanofasern auf 600 bis 800 °C in einer sauerstoffhaltigen Atmosphäre umfasst.

8. Verfahren zur Herstellung eines Dichtungselements für Rohrleitungskomponenten mit ausgezeichneter Chlorbeständigkeit gemäß einem der Ansprüche 4 bis 7,
wobei der erste Schritt zum Erhalt der zweiten Kohlenstoffnanofasern das Reduzieren der Masse der ersten Kohlenstoffnanofasern um 2 bis 20% umfasst.

9. Verfahren zur Herstellung eines Dichtungselements für Rohrleitungskomponenten mit ausgezeichneter Chlorbeständigkeit gemäß einem der Ansprüche 4 bis 8,
wobei die zweiten Kohlenstoffnanofasern einen mittleren Durchmesser von 60 nm bis 150 nm aufweisen.

10. Verfahren zur Herstellung eines Dichtungselements für Rohrleitungskomponenten mit ausgezeichneter Chlorbeständigkeit gemäß einem der Ansprüche 4 bis 9,
wobei der zweite Schritt das Mischen von 5 bis 50 Gewichtsteilen der zweiten Kohlenstoffnanofasern und 10 bis 120 Gewichtsteilen des Rußes mit 100 Gewichtsteilen des Ethylen-Propylen-Kautschuks einschließt.

11. Rohrleitungskomponente, umfassend das Dichtungselement mit ausgezeichneter Chlorbeständigkeit gemäß einem der Ansprüche 1 bis 3.

## Revendications

1. Un organe d'étanchéité d'élément de tuyauterie présentant une excellente résistance au chlore, l'organe d'étanchéité comprenant un caoutchouc éthylène-propylène, des nanofibres de carbone oxydées en surface et du noir de carbone présentant un diamètre moyen de particules de 50 nm à 10 micromètres, dans lequel les nanofibres de carbone présentent une concentration d'oxygène de surface mesurée par spectroscopie photoélectronique par rayons X (XPS) de 2,6 à 4,6 atm % ;
dans lequel les nanofibres de carbone présentent un diamètre moyen de 20 nm à 230 nm.

2. L'organe d'étanchéité d'élément de tuyauterie présentant une excellente résistance au chlore selon la revendication 1,
dans lequel les nanofibres de carbone présentent un diamètre moyen de 60 à 150 nm.

3. L'organe d'étanchéité d'élément de tuyauterie présentant une excellente résistance au chlore selon la revendication 1 ou la revendication 2, l'organe d'étanchéité comprenant de 5 à 50 parties en masse de nanofibres de carbone et de 10 à 120 parties en masse de noir de carbone sur la base de 100 parties en masse de caoutchouc éthylène-propylène.

4. Un procédé de fabrication d'un organe d'étanchéité d'élément de tuyauterie présentant une excellente résistance au chlore, le procédé comprenant une première étape qui comprend l'oxydation des premières nanofibres de carbone produites par un procédé de croissance en phase vapeur pour obtenir des secondes nanofibres de carbone oxydées en surface et une seconde étape qui comprend le mélange de noir de carbone présentant un diamètre moyen de particules de 50 nm à 10 micromètres et les secondes nanofibres de carbone dans un caoutchouc éthylène-propylène et la dispersion du carbone noir et des secondes nanofibres de carbone dans le caoutchouc éthylène-propylène en appliquant une force de cisaillement,
dans lequel les secondes nanofibres de carbone présentent une concentration d'oxygène de surface mesurée par spectroscopie photoélectronique par rayons X (XPS) de 2,6 à 4,6 atm % ; dans lequel les secondes nanofibres de carbone présentent un diamètre moyen de 20 nm à 230 nm.

5. Le procédé de fabrication d'un organe d'étanchéité d'élément de tuyauterie présentant une excellente résistance au chlore selon la revendication 4,
dans lequel la première étape est effectuée de manière à ce que la concentration d'oxygène de surface des secondes nanofibres de carbone mesurée par spectroscopie photoélectronique par rayons X (XPS) soit plus élevée que celle des premières nanofibres de carbone de 0,5 à 2,6 atm %.

6. Le procédé de fabrication d'un organe d'étanchéité d'élément de tuyauterie présentant une excellente résistance au chlore selon la revendication 4 ou 5,
dans lequel la première étape est effectuée de manière à ce que la concentration d'oxygène de surface des secondes nanofibres de carbone mesurée par spectroscopie photoélectronique par rayons X (XPS) soit plus élevée que celle des premières nanofibres de carbone de 20 à 120 %.

7. Le procédé de fabrication d'un organe d'étanchéité d'élément de tuyauterie présentant une excellente résistance au chlore selon l'une quelconque des revendications 4 à 6,
dans lequel la première étape comprend le chauffage des premières nanofibres de carbone de 600 à 800 °C dans une atmosphère contenant de l'oxygène.

8. Le procédé de fabrication d'un organe d'étanchéité d'élément de tuyauterie présentant une excellente résistance au chlore selon l'une quelconque des revendications 4 à 7,
dans lequel la première étape comprend la réduction de la masse des premières nanofibres de carbone de 2 à 20 % pour obtenir les secondes nanofibres de carbone.

9. Le procédé de fabrication d'un organe d'étanchéité d'élément de tuyauterie présentant une excellente résistance au chlore selon l'une quelconque des revendications 4 à 8,
dans lequel les secondes nanofibres de carbone présentent un diamètre moyen de 60 à 150 nm.

10. Le procédé de fabrication d'un organe d'étanchéité d'élément de tuyauterie présentant une excellente résistance au chlore selon l'une quelconque des revendications 4 à 9,
dans lequel la seconde étape comprend le mélange de 5 à 50 parties en masse des secondes nanofibres de carbone et de 10 à 120 parties en masse de noir de carbone avec 100 parties en masse de caoutchouc éthylène-propylène.

11. Un élément de tuyauterie comprenant l'organe d'étanchéité présentant une excellente résistance au chlore selon l'une quelconque des revendications 1 à 3.
